# FASCICULE DE BREVET EUROPEEN

(11) **EP 0 858 425 B1**
(45) Date de publication et mention de la délivrance du brevet: **02.06.1999**
(21) Numéro de dépôt: 96934917.4
(22) Date de dépôt: 16.10.1996
(51) Int. Cl.: C01B 13/02

(54) **DISPOSITIF DE PRODUCTION AUTONOME D'OXYGENE RESPIRABLE A HAUTE PRESSION PAR VOIE CHIMIQUE**
VORRICHTUNG ZUR AUTONOMEN HERSTELLUNG VON ATEMBAREN HOCHDRUCKSAUERSTOFF
SELF-CONTAINED DEVICE FOR CHEMICALLY PRODUCING HIGH-PRESSURE BREATHING OXYGEN

(30) Priorité: 20.10.1995 FR 9512360
(43) Date de publication de la demande: 19.08.1998
(73) Titulaire: ETAT FRANCAIS représenté par le Délégué Général pour l'Armement, F-00460 Armées (FR); SOCIETE NATIONALE DES POUDRES ET EXPLOSIFS, F-75181 Paris Cédex 04 (FR)
(72) Inventeur: EVRARD, Patrick, F-45000 Orléans (FR); LAVOIX, François, F-33240 Verac (FR)
(74) Mandataire: Pech, Bernard
(86) Numéro de dépôt international: FR9601611
(87) Numéro de publication internationale: WO9715525

(56) Documents cités:
- DE-A- 2 517 990
- FR-A- 1 403 612
- FR-A- 2 620 435
- US-A- 5 058 578
- DATABASE WPI Section Ch, Week 7704 Derwent Publications Ltd., London, GB; Class E37, AN 77-06509Y XP002005970 & JP 51 142 513 A (NIPPON OILS & FATS KK) , 9 Décembre 1976

## Description

La présente invention concerne un dispositif de production autonome d'oxygène respirable à haute pression par voie chimique.

Le secteur technique de l'invention est celui de la fourniture instantanée d'oxygène respirable.

Les domaines visés sont le domaine médical ou paramédical, le domaine aéronautique et le domaine militaire.

Les principaux procédés connus qui sont utilisés pour produire de l'oxygène correspondant aux normes industrielles ou médicales sont la distillation après liquéfaction de l'air, l'électrolyse de l'eau et les procédés chimiques.

Si les deux premiers procédés sont largement répandus dans l'industrie, en particulier pour la distillation, les dispositifs mis en oeuvre sont lourds, volumineux et complexes. En outre, dans le cas de la distillation, ils ne permettent pas d'obtenir instantanément le gaz souhaité, étant donné qu'une phase de refroidissement de l'air est nécessaire pour la liquéfaction.

Les procédés chimiques permettent, au contraire, de s'affranchir d'appareillages complexes et sont particulièrement indiqués pour les situations extrêmes telles que les sites éloignés, isolés, les catastrophes naturelles, les situations d'urgence, de crises ou de conflits.

Parmi les différents procédés connus de production d'oxygène par voie chimique, on peut citer le procédé consistant à utiliser des agglomérés solides dégageant de l'oxygène par décomposition thermochimique.

Le produit de base de ces agglomérés, dénommés chandelles chimiques, est un sel oxygéné capable de libérer de l'oxygène par chauffage.

On utilise généralement des chlorates alcalins en mélange avec un catalyseur du type oxyde métallique qui abaisse la température de décomposition et avec un corps combustible dont l'oxydation dégage la chaleur nécessaire pour maintenir la température de réaction d'oxydo-réduction.

Néanmoins, les dispositifs de génération d'oxygène par voie chimique présentent deux inconvénients majeurs:
- ils ne permettent pas d'obtenir une production d'oxygène à pression élevée, notamment pour le remplissage de bouteilles ou de réservoirs, car la réaction thermochimique des agglomérés solides utilisés risque de dégénérer, pouvant aller ainsi jusqu'à l'explosion;
- lors du déclenchement de la réaction, il y a une production élevée de monoxyde et dioxyde de carbone, ce qui n'autorise pas l'emploi du gaz généré dans le domaine médical où la conformité à la pharmacopée est indispensable.

On a remédié à ces inconvénients en utilisant un combustible dépourvu de carbone, de forte réactivité tout en évitant le risque d'explosion, à savoir le magnésium.

Le brevet français n°1403612 décrit un appareillage pour la production d'oxygène respirable comprenant une masse active à base d'un chlorate alcalin mélangé à un catalyseur constitué par du bioxyde de manganèse et à du magnésium comme combustible.

Cependant une telle masse active ne présente pas un haut rendement volumétrique car la densité de l'aggloméré demeure voisine de celle du chlorate alcalin, en l'occurrence le chlorate de sodium, c'est-à-dire environ 1,6.

Le brevet français 2620435 divulgue des agglomérés contenant les mêmes ingrédients mais de densité supérieure à 1,8. Ces agglomérés solides sont obtenus par compression au-delà de 10⁸ Pa (1000bars) , d'un mélange à base de chlorate de sodium (NaClO₃), bichromate de sodium (NaCr₂O₃), bioxyde de manganèse (MnO₂), magnésium (Mg) et eau (H₂O). La présence d'eau est nécessaire car elle joue le rôle d'agent de cohésion et permet d'assurer une grande sécurité de travail en rendant le mélange inerte. Malgré les fortes pressions appliquées lors de la fabrication des agglomérés, on évite ainsi les risques de décomposition brutale de ces mélanges et d'explosion.

La chandelle confinée dans un réservoir sous pression doit être amorcée par des moyens adaptés à cet effet.

Dans le brevet français 2523867, est décrit un générateur chimique d'oxygène dans lequel le réservoir sous pression où est logée la chandelle maintenue entre deux disques perforés forme tout autour de celle-ci un espace vide et dans lequel l'oxygène peut, en traversant une membrane qui est perforée lors du déclenchement des moyens d'amorçage, s'échapper par un orifice de sortie. Cependant, la configuration de cet appareil ne permet pas une montée en haute pression et, de plus, il s'agit d'un système à usage unique, puisqu'il n'est pas possible de remplacer la chandelle.

Le brevet français 2 650 586 décrit une composition d'allumage par percussion comprenant une composition d'amorçage par percussion et un mélange de poudres de titane et de bore ne générant pas de gaz, utilisée dans des systèmes d'armement.

Un but de la présente invention est de produire directement sur le terrain, grâce à un dispositif d'utilisation simple, léger et peu volumineux, de l'oxygène sous haute pression, c'est-à-dire supérieure ou égale à 100 bars et destiné au remplissage de bouteilles ou de réservoirs.

Un autre but de l'invention est de fournir un oxygène dit médical, c'est-à-dire dont les caractéristiques et la pureté sont conformes à la pharmacopée européenne, soit une teneur en oxygène de 99,5%, une teneur maximale en monoxyde de carbone de 5ppm et une teneur maximale en dioxyde de carbone de 300ppm.

Pour ce faire, l'invention a pour objet un dispositif de génération autonome d'oxygène respirable du type comportant une chandelle chimique de génération d'oxygène équipée d'une masse active, de moyens d'amorçage et de moyens de filtration de l'oxygène produit, ladite chandelle chimique étant logée dans une enceinte de confinement étanche composée d'un corps, d'un couvercle et de moyens de percussion de l'amorce caractérisé en ce que les moyens d'amorçage comportent une partie d'amorçage comprenant un mélange comprimé de titane et de bore, et en ce que les moyens de filtration comprennent une cartouche avec un opercule de sortie de l'oxygène produit, cartouche située à l'opposé des moyens d'amorçage et comportant au moins une couche à base de chaux, pour la production d'oxygène à haute pression.

La masse active de la chandelle chimique est un aggloméré solide composé de chlorate de sodium, de bichromate de sodium, de bioxyde de manganèse, de magnésium et d'eau déminéralisée.

L'aggloméré solide présente une densité au moins égale à 2,4.

Dans une première réalisation la chaux est associée à un tamis moléculaire.

Avantageusement, le tamis moléculaire est disposé à l'extrémité de la cartouche, le plus loin possible des zones de haute température.

Le générateur d'oxygène de l'invention peut produire de l'oxygène à usage médical.

Selon ce mode de réalisation préférentiel, les moyens de filtration comprennent un mélange de divers oxydes connu sous la dénomination commerciale hopcalite et des sels hygroscopiques.

De manière préférentielle, l'hopcalite est en contact direct avec la masse active et est disposée en mélange avec de la chaux en granulés autour de la masse active et sur la face arrière à l'intérieur de la cartouche filtrante.

De préférence, les moyens de percussion comprennent une première partie solidaire de l'enceinte de confinement étanche et une deuxième partie indépendante de la première et actionnée par une commande externe.

Selon un mode de réalisation, la première partie des moyens de percussion est constituée par un pointeau mobile et un joint d'étanchéité, la face interne du pointeau recevant la pression de l'oxygène produit, et la deuxième partie est constituée par un marteau guidé en translation et propulsé par des ressorts, le marteau étant actionné par un levier d'armement manuel.

Préférentiellement, le corps et le couvercle de l'enceinte sont réalisés en un matériau unique ayant subi un traitement auto-lubrifiant et anti-usure.

Ce matériau unique peut être un acier spécial ou du titane.

Selon une variante de réalisation, les moyens de filtration comportent un filtre additionnel situé à l'extérieur de l'enceinte et comprenant de la chaux sodée ou non, du tamis moléculaire, de l'hopcalite et du charbon actif.

Dans un mode de réalisation préféré, les moyens de filtration situés dans la cartouche comprennent aussi un filtre de fines particules.

Ce filtre est par exemple constitué par de la laine minérale.

Selon une variante, le générateur d'oxygène comporte une soupape de décharge permettant d'évacuer l'air contenu dans l'enceinte au moment de l'ignition de la chandelle.

Le dispositif selon l'invention comporte des moyens de stockage sous haute pression de l'oxygène produit ; ces moyens sont des bouteilles d'oxygène ou des réservoirs.

La chandelle est un aggloméré solide obtenu par compression d'un mélange contenant pour 100 parties en masse de chlorate de sodium, 5 à 7 parties en masse de bioxyde de manganèse, 2 à 3 parties en masse de magnésium, environ 0,3 partie en masse de bichromate de sodium et de l'eau déminéralisée, en une quantité telle qu'elle représente avec l'eau éventuellement contenue dans le chlorate, environ 1% de la masse du chlorate sec.

La production d'oxygène résulte de la thermodécomposition du chlorate de sodium mélangé au bioxyde de manganèse qui joue le rôle d'oxydant; cette réaction d'oxydo-réduction produit une forte quantité de chaleur permettant de casser la liaison moléculaire entre les atomes d'oxygène et le reste de la molécule de sodium. Le choix du réducteur, en l'occurrence le magnésium, est fondamental car il permet de pouvoir confiner la chandelle dans des conditions de température et de pression très élevées sans que la réaction dégénère.

Dès le début du fonctionnement de la chandelle, l'oxygène est libéré et la réaction étant inextinguible et confinée, la pression s'élève.

On dispose alors d'une source d'oxygène ajustable à la pression désirée.

La chandelle est constituée de blocs très fortement comprimés jusqu'à obtenir des blocs de densité de 2,4 et plus. Cette caractéristique est très importante car elle permet de maîtriser la vitesse de combustion et assure une parfaite sécurité dans les conditions d'utilisation. En outre, le rapport entre le volume de la chandelle et le volume d'oxygène produit s'en trouve amélioré, ce qui est fondamental dans certaines applications telles que les sous-marins, les aéronefs.

La chandelle est placée dans une enveloppe réalisée dans un matériau adapté aux conditions de température, de pression élevées et à l'ambiance très oxydante. La forme de cette enveloppe peut être quelconque, parallélipipédique, cylindrique, ou autre et ses dimensions variables en fonction des besoins. En effet, le volume de l'enveloppe de la chandelle est directement lié au volume d'oxygène souhaité et à l'application concernée, par exemple la génération de haute pression, la régénération d'atmosphère, l'oxygénothérapie, le besoin industriel.

En fonction du volume d'oxygène, on trouve une partie chimique plus ou moins importante de quelque dizaines de grammes à plus de la dizaine de kilogrammes.

L'amorçage de la chandelle est particulièrement délicat lorsqu'on désire produire de l'oxygène médical; en effet, il faut que le démarrage soit performant et sûr sans génération excessive de monoxyde de carbone.

La partie amorçage se compose d'un porte-amorce muni de son amorce pyrotechnique du type à enclume et d'un comprimé de titane et de bore logé dans une pastille d'allumage de composition chloratée fortement enrichie en magnésium.

Quel que soit le type d'application, la partie amorçage est la même avec un porte-amorce permettant de recevoir tout type d'embout, tel qu'un embout porte-percuteur, un embout conique mâle, un embout conique femelle. Ce standard assure l'efficacité optimale de l'amorçage par la maîtrise permanente de la chambre d'étincelle et de l'étanchéité de l'ensemble.

La partie filtration a pour objectif d'épurer l'oxygène produit.

Elle comprend un filtre à adsorption et un filtre à particules.

Le filtre à adsorption comprend de la chaux, du tamis moléculaire et éventuellement un mélange de divers oxydes connu sous la dénomination commerciale d'hopcalite.

En outre, la filtration des fines particules est assurée par une couche de laine minérale dans la chandelle.

Parmi les matières filtrantes utilisées, la chaux permet l'absorption du dioxyde de carbone; le tamis moléculaire assure la fixation de l'eau résiduelle et des traces de chlore; l'hopcalite assure l'élimination du monoxyde de carbone en catalysant sa transformation en dioxyde de carbone.

La disposition des matières filtrantes est très importante.

L'hopcalite nécessite des températures élevées pour fonctionner; on la place donc le plus près possible des blocs de chandelle, en mélange avec de la chaux en granulés autour des blocs et sur la face arrière.

Le tamis moléculaire doit être éloigné le plus possible des zones de hautes températures; on le place complètement à l'extrémité de la chandelle.

Un filtre complémentaire comprenant les mêmes composants de chaux sodée ou non, hopcalite, tamis moléculaire, mais aussi charbon actif peut être ajouté pour améliorer encore la pureté de l'oxygène émis.

On peut utiliser des combinaisons de produits filtrants plus ou moins coûteuses en fonction de l'application envisagée. En effet, l'hopcalite est un catalyseur onéreux et le prix de la chaux peut varier du simple au double selon sa provenance.

On distingue un oxygène respirable d'un oxygène médical.

Pour obtenir un oxygène respirable, on se contente d'une chaux de qualité moyenne et de tamis moléculaire, ce qui conduit à un teneur en dioxyde de carbone d'environ 100 ppm, une teneur en monoxyde de carbone entre 2 et 6 ppm et quelques traces d'eau.

Afin d'obtenir un oxygène médical, on utilise une chaux plus réactive ainsi que de l'hopcalite disposée en mélange et en tampon, ce qui conduit à une pollution minimale de 2 ppm de monoxyde de carbone, moins de 50 ppm de dioxyde de carbone et moins de 60 ppm d'eau.

La pureté de l'oxygène produit provient aussi du mode d'élaboration du générateur où toute source de pollution accidentelle est éliminée, car les constituants autres que chimiques et pyrotechniques sont montés en milieu dépollué.

En outre pour l'oxygène de qualité médicale, on assure l'évacuation de l'air contenu dans le générateur au moment de l'ignition de la chandelle par tout moyen adéquat tel qu'une soupape de décharge ou par une purge manuelle pendant 30 secondes; pendant ce temps, l'oxygène généré nettoie les canalisations et diminue la pointe de monoxyde de carbone due au démarrage de la chandelle.

L'enceinte de confinement se présente sous la forme d'une pièce mécanique en un matériau capable de résister aux contraintes d'origines mécanique telle que la pression, thermique due à l'exothermie de la réaction et chimique due à l'ambiance oxydante.

Le corps et le couvercle du générateur sont réalisés en acier spécial ou en titane.

Dans un mode de réalisation, la liaison mécanique entre le corps et le couvercle est assurée par un dispositif à baïonnette, le corps et le couvercle comportant chacun cinq tenons sur la circonférence. On peut utiliser également un système de fermeture à vis.

L'optimisation de la géométrie de l'enceinte a été réalisée par analyse tridimensionnelle volumique et thermo-élastique à l'aide de la méthode des éléments finis.

La paroi extérieure du corps est ondulée afin d'améliorer la résistance mécanique à la pression et d'améliorer le refroidissement de la chambre de réaction par convection naturelle, grâce à l'augmentation de la surface de contact avec l'air ambiant.

Les dessins annexés représentent des exemples préférentiels de réalisation de l'invention.

La figure 1 est un schéma de principe du dispositif selon l'invention.

La figure 2 est une vue en demi-coupe d'une chambre de réaction pour chandelle chimique.

La figure 3 est une vue en coupe d'une chandelle chimique.

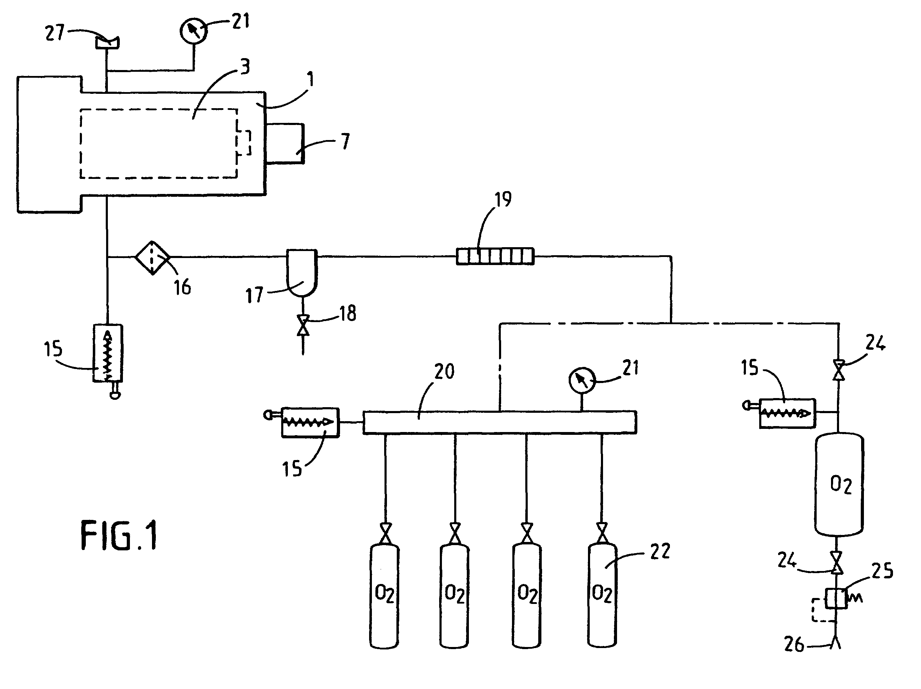

La figure 1 représente un dispositif selon l'invention comprenant:
- une chambre de réaction 1,
- un dispositif d'amorçage 7,
- une chandelle 3,
- un ensemble d'appareillages et d'accessoires nécessaires au fonctionnement et à l'utilisation du dispositif.

Après ignition de la chandelle 3, grâce au dispositif d'amorçage 7, l'oxygène sort de la chambre de réaction 1 pour subir dans le filtre 16 une première filtration au niveau des particules solides en suspension véhiculées par le gaz: micro-particules d'éléments solides constitutifs de la chandelle tels que composants d'isolation thermique, produits de calage. Le gaz traverse ensuite un filtre à coalescence 17 qui condense les résidus de vapeur d'eau produits lors de la réaction chimique; l'eau ainsi condensée est purgée à chaque cycle de production par l'intermédiaire de la vanne 18. La soupape 15 et le dispositif du type à disque de rupture 27 permettent d'assurer le fonctionnement de la chambre de réaction en toute sécurité.

A ce stade d'épuration, le gaz a une pureté conforme à la pharmacopée européenne.

Une troisième filtration à l'aide du filtre 19 permet de diminuer la teneur en monoxyde et dioxyde de carbone, d'abaisser le point de rosée et d'éliminer les traces éventuelles d'odeurs du gaz produit.

La pureté du gaz dépend à ce niveau essentiellement du dimensionnement du filtre 19; les valeurs nominales obtenues sont de 99,9% d'oxygène, moins de 2 ppm de monoxyde de carbone et moins de 30 ppm de dioxyde de carbone.

A la sortie du filtre 19, deux possibilités d'utilisation de l'oxygène sont envisageables:
- une rampe 20 de remplissage de bouteilles d'oxygène 22 à haute pression de capacité en eau adaptée au volume généré lors de la réaction chimique. Ces bouteilles peuvent être connectées à la rampe grâce à un système de raccords rapides facilitant ainsi les manoeuvres de remplissage sur le terrain. Le manomètre 21 permet le rappel de la pression au niveau de la rampe 20 des bouteilles 22; la soupape de sûreté 15 assure la sécurité en haute pression par redondance avec celle de la chambre de réaction.
- un réservoir à haute pression 23 de capacité adaptée au volume d'oxygène généré et permettant d'assurer le rôle d'accumulateur de gaz. Les vannes 24 permettent d'isoler le réservoir. L'oxygène est ensuite détendu grâce au détendeur 25 pour pouvoir être utilisé directement dans un ventilateur de premier secours raccordé à la prise 26 et fonctionnant sous 3,5 bars dans le cas d'une antenne médicale; la soupape 15 a la même fonction que celle décrite précédemment.

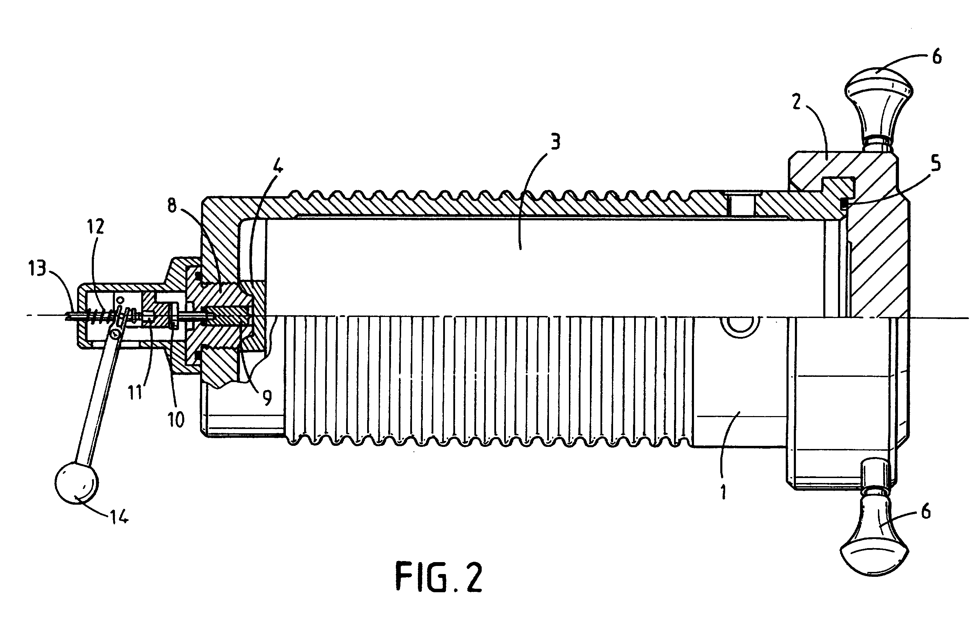

La figure 2 montre un exemple de réalisation d'une chambre de réaction conçue et fabriquée pour une pression interne de service de 150 bars. Cette chambre a été soumise à une pression d'épreuve de 225 bars, conformément à la réglementation sur les appareils à pression de gaz.

L'enceinte de confinement se présente sous la forme d'un tube cylindrique 1, appelé corps, et d'un couvercle 2.

La pièce 3 disposée à l'intérieur représente la chandelle avec son porte-amorce pyrotechnique 4.

L'étanchéité du système de fermeture est assurée entre le corps 1 et le couvercle 2 par un joint dynamique spécial 5 résistant aux contraintes de pression, température, nature du gaz et ignition éventuelle due à la haute pression.

Un bras support de couvercle permet les mouvements d'ouverture et fermeture du couvercle 2 par rapport au corps 1.

Le mouvement d'ouverture est effectué par:
- rotation du couvercle 2 autour de l'axe de symétrie principal de la chambre de réaction, grâce aux poignées 6,
- translation du couvercle sur un guide solidaire du bras support,
- rotation simultanée du couvercle 2 et du bras support autour d'un axe disposé perpendiculairement à l'axe de symétrie principal de la chambre de réaction.

Pour le mouvement d'ouverture, un mécanisme permet l'indexage en position complètement ouverte du bras support et du couvercle 2.

Pour le mouvement de fermeture, un mécanisme permet de la même façon l'indexage rigoureux en position verrouillée du couvercle 2 par rapport au corps 1.

Les éléments 7 à 14 sont les éléments constitutifs du dispositif d'amorçage de la chandelle.

Le système de percussion mécanique illustré sur la figure 2 n'exclut pas d'autres procédés permettant l'ignition de la chandelle par système électrique, piézo-électrique, thermique ou chimique.

Le levier d'armement 14 permet, par rotation autour de son axe de manoeuvre, la compression du ressort 12. Le marteau 11 subit alors un mouvement de recul par translation des guides 13 dans le carter. Le mouvement s'interrompt dès que le levier n'est plus en contact avec le marteau. Ce dernier propulsé par le ressort 12 vient percuter la pièce 10 solidaire du pointeau 9 coulissant dans la pièce 8, le pointeau venant à son tour frapper violemment le porte-amorce 4 de la chandelle.

L'étanchéité du dispositif d'amorçage est assurée grâce à un système de joints capables de résister aux contraintes précitées.

L'initialisation du pointeau 9 est assurée automatiquement dès la montée en pression de la chambre de réaction.

Le dispositif est alors prêt pour un nouvel amorçage de la chandelle.

Le dégagement d'oxygène étant confiné dans l'enceinte, la pression peut s'élever jusqu'à la pression de tarage de la soupape de sûreté, la pression de la soupape étant égale à la pression maximale d'utilisation majorée de 10%. En cas d'anomalie, une seconde sécurité, de type à disque de rupture, garantit le fonctionnement de l'appareil en toute sécurité, la pression du disque étant égale à la pression maximale de service majorée de 20%.

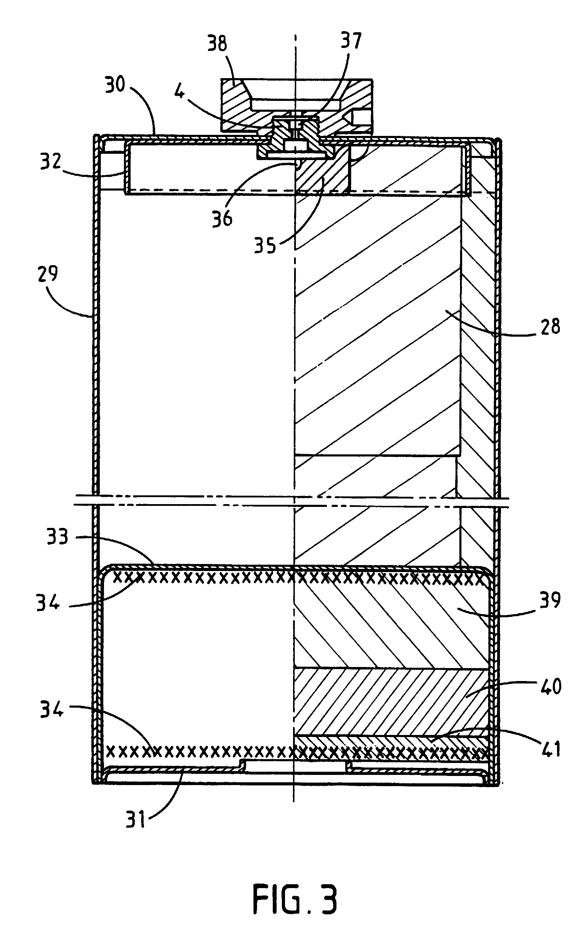

La figure 3 montre un exemple de réalisation d'une chandelle chimique.

La chandelle comporte une enveloppe 29 en acier spécial munie d'une coupelle étanche supérieure 30 en même matériau et contenant la masse active 28 de la chandelle composée de plusieurs blocs empilés et autocentrés.

La cartouche filtrante 33 est composée de deux grillages 34, d'un filtre à adsorption à chaux sodée et hopcalite 39 et tamis moléculaire 40 et d'un filtre à particules 41 en laine minérale; l'ensemble est fermé par un opercule de sortie 31.

La chandelle reçoit un porte-amorce 4 muni d'une amorce 37 et d'un embout d'adaptation 38.

La coupelle en cuivre 32 limite les effets d'oxycoupage dus à l'allumage du comprimé d'amorçage 36 et de la pastille d'amorçage 35.

Les exemples non limitatifs ci-après illustrent la description.

### EXEMPLE 1: Chandelle à oxygène respirable

- Masse active:: 7449 grammes (à 7, 4 et 2% de magnésium) densité 2,39
- Chaux en calage:: 1100 grammes de chaux moyenne ( sodée ) 250 grammes de tamis moléculaire.

### EXEMPLE 2: Chandelle à oxygène médical

- Masse active:: 7449 grammes (à 7, 4 et 2% de magnésium) densité 2,39
- Chaux en calage:: 700 grammes de chaux non sodée
- Hopcalite en calage:: 100 grammes
- Cartouche filtrante:: 100 grammes d'hopcalite
500 grammes de chaux non sodée.

Le dispositif selon l'invention présente les avantages suivants:
- mise en fonctionnement du matériel simple pouvant être assurée par un personnel non expérimenté à la conduite d'équipements sophistiqués,
- excellente fiabilité et maintenance très réduite du matériel car il possède peu de pièces, la plupart d'entre elles sont statiques, aptes à résister à des contraintes de tous types rencontrées sur le terrain,
- faible encombrement et faible masse facilitant le transport, l'aérotransport voire le parachutage,
- instantanéité de la production d'oxygène dès le déclenchement de l'amorce, permettant de satisfaire les besoins d'une antenne de secours médical,
- production d'oxygène tiède et légèrement humide permettant l'utilisation en oxygénothérapie sans humidification ultérieure,
- fourniture d'un gaz conforme aux normes européenne et médicales,
- possibilité de remplissage de bouteilles et de réservoirs sous haute pression.

## Revendications

1. Dispositif de génération autonome d'oxygène respirable du type comportant une chandelle chimique de génération d'oxygène (3) équipée d'une masse active (28), de moyens d'amorçage et de moyens de filtration de l'oxygène produit, ladite chandelle chimique (3) étant logée dans une enceinte de confinement étanche composée d'un corps (1), d'un couvercle (2) et de moyens de percussion de l'amorce caractérisé en ce que les moyens d'amorçage comportent une partie d'amorçage comprenant un mélange comprimé de titane et de bore, et en ce que les moyens de filtration comprennent une cartouche (33) avec un opercule (31) de sortie de l'oxygène produit, cartouche (33) située à l'opposé des moyens d'amorçage et comportant au moins une couche à base de chaux, pour la production d'oxygène à haute pression.

2. Dispositif selon la revendication 1, caractérisé en ce que la masse active (28) est un aggloméré solide composé de chlorate de sodium, de bichromate de sodium, de bioxyde de manganèse, de magnésium et d'eau déminéralisée.

3. Dispositif selon la revendication 2, caractérisé en ce que la masse active (28) est un aggloméré solide de densité au moins égale à 2,4.

4. Dispositif selon les revendications 1 à 3, caractérisé en ce que la chaux est associée à un tamis moléculaire (40) et que le tamis moléculaire (40) est disposé à l'extrémité de la cartouche (33), le plus loin possible des zones de haute température.

5. Dispositif selon les revendications 1 à 3, caractérisé en ce que, pour la production d'oxygène médical, les moyens de filtration comprennent un mélange de divers oxydes connu sous la dénomination commerciale hopcalite et des sels hygroscopiques.

6. Dispositif selon la revendication 5, caractérisé en ce que l'hopcalite est en contact direct avec la masse active et est disposée en mélange avec de la chaux en granulés autour de la masse active et en partie arrière à l'intérieur de la cartouche filtrante (33).

7. Dispositif selon l'une des revendications précédentes, caractérisé en ce que les moyens de percussion comprennent une première partie solidaire de l'enceinte de confinement étanche et une deuxième partie indépendante de la première et actionnée par une commande externe.

8. Dispositif selon la revendication 7, caractérisé en ce que la première partie des moyens de percussion est constituée par un pointeau mobile (9) et un joint d'étanchéité, la face interne du pointeau recevant la pression de l'oxygène produit, et en ce que la deuxième partie est consituée par un marteau (11) guidé en translation et propulsé par des ressorts (12), le marteau (11) étant actionné par un levier d'armement manuel (14).

9. Dispositif selon l'une des revendications 1 à 8, caractérisé en ce que le corps (1) et le couvercle (2) de l'enceinte sont réalisés en un matériau unique ayant subi un traitement de surface auto-lubrifiant et anti-usure.

10. Dispositif selon la revendication 9, caractérisé en ce que le matériau unique est un acier spécial ou du titane.

11. Dispositif selon l'une des revendications 9 ou 10, caractérisé en ce que le corps (1) et le couvercle (2) de l'enceinte de confinement sont liés mécaniquement par un dispositif à baïonnette.

12. Dispositif selon l'une des revendications 1 à 11, caractérisé en ce que les moyens de filtration comportent un filtre additionnel (19) situé à l'extérieur de l'enceinte et comprenant de la chaux sodée ou non, du tamis moléculaire, de l'hopcalite et du charbon actif.

13. Dispositif selon l'une des revendications 1 à 12, caractérisé en ce que les moyens de filtration (39,40) situés dans la cartouche comprennent aussi un filtre de fines particules (41).

14. Dispositif selon la revendication 13, caractérisé en ce que le filtre de fines particules (41) est constitué par de la laine minérale.

15. Dispositif selon l'une des revendication 1 à 3 ou 5 à 14, caractérisé en ce qu'il comporte une soupape de décharge (15) permettant d'évacuer l'air contenu dans l'enceinte au moment de l'ignition de la chandelle.

## Patentansprüche

1. Vorrichtung zur autonomen Erzeugung von atembarem Sauerstoff
mit einem chemischen Einsatz (3), der Sauerstoff erzeugt und eine aktive Masse (28), eine Zündeinrichtung und eine Filtrationseinrichtung zur Filtration des erzeugten Sauerstoffs aufweist,
wobei der chemische Einsatz (3) in einem dichten Druckbehälter vorgesehen ist, der aus einem Körper (1), einem Deckel (2) und einer Schlagzündeinrichtung zur Auslösung des Zünders besteht,
**dadurch gekennzeichnet**, daß
zur Erzeugung von Sauerstoff mit hohem Druck
- die Zündeinrichtung einen Zünderteil aufweist, der ein gepreßtes Gemisch von Titan und Bor enthält, und
- die Filtrationseinrichtung eine Kartusche (33) mit einer Abdeckscheibe (31) aufweist, durch die der erzeugte Sauerstoff austritt,
wobei die Kartusche (33) an der Seite vorgesehen ist, die der Zündeinrichtung gegenüberliegt, und mindestens eine Schicht auf der Basis von Kalk aufweist.

2. Vorrichtung nach Anspruch 1, dadurch gekennzeichnet, daß die aktive Masse (28) ein festes Agglomerat ist, das aus Natriumchlorat, Natriumdichromat, Mangandioxid, Magnesium und entmineralisiertem Wasser besteht.

3. Vorrichtung nach Anspruch 2, dadurch gekennzeichnet, daß die aktive Masse (28) ein festes Agglomerat einer Dichte von mindestens 2,4 g/cm³ ist.

4. Vorrichtung nach den Ansprüchen 1 bis 3, dadurch gekennzeichnet, daß der Kalk in Kombination mit einem Molekularsieb (40) vorliegt, das am Ende der Kartusche (33) in größtmöglichem Abstand von den Bereichen hoher Temperatur angeordnet ist.

5. Vorrichtung nach den Ansprüchen 1 bis 3, dadurch gekennzeichnet, daß zur Erzeugung von medizinischem Sauerstoff die Filtrationseinrichtung ein unter der Handelsbezeichnung Hopcalit bekanntes Gemisch verschiedener Oxide sowie hygroskopische Salze enthält.

6. Vorrichtung nach Anspruch 5, dadurch gekennzeichnet, daß der Hopcalit in direktem Kontakt mit der aktiven Masse steht und im Gemisch mit dem Kalk in Kornform um die aktive Masse herum sowie im hinteren Teil im Inneren der zur Filtration dienenden Kartusche (33) vorgesehen ist.

7. Vorrichtung nach einem der vorhergehenden Ansprüche, dadurch gekennzeichnet, daß die Schlagzündeinrichtung einen ersten Teil, der mit dem dichten Druckbehälter verbunden ist, und einen zweiten Teil aufweist, der vom ersten Teil unabhängig ist und durch eine äußere Betätigungseinrichtung betätigt wird.

8. Vorrichtung nach Anspruch 7, dadurch gekennzeichnet, daß der erste Teil der Schlagzündeinrichtung aus einem beweglichen Schlagstift (9) und einer Dichtung besteht, wobei die Innenfläche des Schlagstiftes mit dem Druck des erzeugten Sauerstoffs beaufschlagt wird, sowie, daß der zweite Teil aus einem in Längsrichtung verschiebbar geführten und durch Federn (12) vorschiebbaren Hammer (11) besteht, der durch einen handbetätigten Spannhebel (14) betätigt wird.

9. Vorrichtung nach einem der Ansprüche 1 bis 8, dadurch gekennzeichnet, daß der Körper (1) und der Deckel (2) des Druckbehälters aus einem speziellen Material bestehen, das zur Erzielung von Selbstschmierung und zur Verschleißminderung oberflächenbehandelt ist.

10. Vorrichtung nach Anspruch 9, dadurch gekennzeichnet, daß das spezielle Material ein Spezialstahl oder Titan ist.

11. Vorrichtung nach Anspruch 9 oder 10, dadurch gekennzeichnet, daß der Körper (1) und der Deckel (2) des Druckbehälters durch einen Bajonettverschluß mechanisch miteinander verbunden sind.

12. Vorrichtung nach einem der Ansprüche 1 bis 11, dadurch gekennzeichnet, daß die Filtrationseinrichtung ein zusätzliches Filter (19) aufweist, das außerhalb des Druckbehälters angeordnet ist und Kalk, der gegebenenfalls Natriumhydroxid enthält, Molekularsieb, Hopcalit und Aktivkohle enthält.

13. Vorrichtung nach einem der Ansprüche 1 bis 12, dadurch gekennzeichnet, daß die Filtrationseinrichtung (39, 40), die sich in der Kartusche befindet, ferner ein Filter (41) für feine Partikel aufweist.

14. Vorrichtung nach Anspruch 13, dadurch gekennzeichnet, daß das Filter (41) für feine Partikel aus Mineralwolle besteht.

15. Vorrichtung nach einem der Ansprüche 1 bis 3 oder 5 bis 14, dadurch gekennzeichnet, daß sie ein Abblasventil (15) aufweist, das ein Abblasen der im Druckbehälter enthaltenen Luft beim Zünden des Einsatzes erlaubt.

## Claims

1. Self-contained device for generating respirable oxygen of the type comprising a chemical candle (3) for generating oxygen equipped with an active mass (28), igniting means and means for filtering the oxygen produced, the said chemical candle (3) being housed in a leakproof containment chamber composed of a body (1), a lid (2) and percussive means for the igniter, characterized in that the igniting means include a igniting part comprising a compressed mixture of titanium and boron, and in that the means of filtration comprise a cartridge (33) with an outlet cover (31) for the oxygen produced, the cartridge (33) being situated opposite the igniting means and including at least one lime-based layer for the production of high-pressure oxygen.

2. Device according to claim 1, characterized in that the active mass (28) is a solid agglomerate composed of sodium chlorate, sodium bichromate, manganese dioxide, magnesium and demineralized water.

3. Device according to claim 2, characterized in that the active mass (28) is a solid agglomerate with a density at least equal to 2.4.

4. Device according to claims 1 to 3, characterized in that the lime is associated with a molecular sieve (40) and that the molecular sieve (40) is disposed at the end of the cartridge (33), as far as possible from high temperature zones.

5. Device according to claims 1 to 3, characterized in that, for the production of medical oxygen, the means of filtration include a mixture of various oxides known under the trade name of hopcalite, and hygroscopic salts.

6. Device according to claim 5, characterized in that the hopcalite is in direct contact with the active mass and is disposed in a mixture with the lime in granules around the active mass and partly to the rear inside the filter cartridge (33).

7. Device according to one of the preceding claims, characterized in that the percussive means comprise a first part secured to the leakproof containment chamber and a second part independent of the first and actuated by an external control.

8. Device according to claim 7, characterized in that the first part of the percussive means consists of a movable pin (9) and a gasket, the internal face of the pin receiving the pressure of the oxygen produced, and in that the second part consists of a striker (11) guided in translation and propelled by springs (12), the striker (11) being actuated by a manual arming lever (14).

9. Device according to one of claims 1 to 8, characterized in that the body (1) and the lid (2) of the chamber are made of a single material which has been subjected to a self-lubricating and anti-wear surface treatment.

10. Device according to claim 9, characterized in that the single material is a special steel or titanium.

11. Device according to either of claims 9 or 10, characterized in that the body (1) and the lid (2) of the containment chamber are attached mechanically by a bayonet device.

12. Device according to one of claims 1 to 11, characterized in that the means of filtration include an additional filter (19) situated outside the chamber and comprising lime with or without sodium hydroxide, a molecular sieve, hopcalite and activated carbon.

13. Device according to one of claims 1 to 12, characterized in that the means of filtration (39,40) situated in the cartridge also include a filter (41) for fine particles.

14. Device according to claim 13, characterized in that the filter (41) for fine particles consists of mineral wool.

15. Device according to one of claims 1 to 3 or 5 to 14, characterized in that it includes a discharge valve (15) enabling the air contained in the chamber to be evacuated the moment the candle is ignited.
